# EUROPEAN PATENT APPLICATION

(11) **EP 2 706 718 A1**
(43) Date of publication of application: **12.03.2014**
(21) Application number: 12851541.8
(22) Date of filing: 12.12.2012
(51) Int. Cl.: H04L 29/06

(54) **METHOD, SYSTEM, AND SERVER FOR DIGITAL COPYRIGHT MANAGEMENT**

(30) Priority: 23.11.2011 CN 201110376756
(71) Applicant: Peking University Founder Group Co., Ltd, Haidian District Beijing 100871 (CN); Beijing Founder Apabi Technology Ltd, Beijing 100080 (CN)
(72) Inventor: WANG, Haitao, Beijing 100871 (CN); HUANG, Ke, Beijing 100871 (CN); ZUO, Fengrui, Beijing 100871 (CN)
(74) Representative: Pfenning, Meinig & Partner GbR
(86) International application number: PCT/CN2012/086463
(87) International publication number: WO 2013/075673

(57) **Abstract**

The present application relates to the field of digital copyright protection, and relates specifically to a method, system, and server for digital copyright management, for use in solving the problem found in the prior art of the inability in digital copyright management to license a work of many sources. The method of embodiments of the present application comprises: a server-side composing into one new digital file the contents of multiple digital files selected by a user; the server-side encrypting the new digital file, and generating licensing information on the basis of a key used during encryption and of information of a client-side logged in by the user; and the server-side transmitting to the client-side the licensing information, used for notifying the client-side to use the new digital file on the basis of the license information. Because the embodiments of the present application compose into one new digital file the contents of the multiple files selected by the user, and transmit to the client-side the license information for the new digital file, licensing for works of many sources is thus implemented.

## Description

This application claims priority from Chinese Patent Application No. 201110376756.2 filed with the Chinese Patent Office on November 23, 2011 and entitled "Method, System, and Server for Digital Copyright Management", which is herein incorporated by reference in its entirety.

### Field of the Invention

The present invention relates to the field of digital rights protection and particularly to a method, system and server for digital rights management.

### Background of the Invention

There is an increasingly prominent demand of users for more abundant works of digital contents along with the development of network technologies and digital publishing technologies and the popularization of various terminal servers.

It is typical in an application of digital content works to authorize the digital content works from a same source without supporting personalized use of a user to the digital content works. This pattern to authorize the digital content works from the same source can not perform more detailed rights management and use control on the digital content works and thus fails to satisfy an application demand of the user for digital content works from multiple sources. In order to satisfy a personalized demand of the user, fine-grained copyright protection of the digital content works from the multiple sources is required.

At present, some fine-grained copyright protection solutions have been proposed in the industry and generally fall into two categories: one category relates to an encryption strategy in which a dedicated file format is adopted so that contents with different privileges are divided into pages in view of a feature of the format per se; and the other category is to encrypt and store a document as a whole, to divide the document only logically into pages and to perform range control for the document at a software layer in the use. The two categories of solutions can only authorize works from a single source per page but can not authorize works from multiple sources.

In summary, authorization can not be made for works from multiple sources in the existing digital rights management.

### Summary of the Invention

Embodiments of the invention provide a method, system and server for digital rights management so as to address the problem in the prior art that authorization can not be made for works from multiple sources in digital rights management.

An embodiment of the invention provides a method for digital rights management, which includes:
combining, by a server, contents of multiple digital files selected by a user into a new digital file;
encrypting, by the server, the new digital file and generating authorization information according to a key used in the encryption and information of a client where the user logins; and
transmitting, by the server, the authorization information to the client to instruct the client to apply the new digital file as per the authorization information.

An embodiment of the invention provides another method for digital rights management, which includes:
combining, by a recombining server, contents of multiple digital files selected by a user into a new digital file;
transmitting, by the recombining server, a key, corresponding to the new digital file, obtained from a granting server to an encrypting server to instruct the encrypting server to encrypt the new digital file by the obtained key; and
instructing, by the recombining server, a client where the user logins to obtain authorization information, corresponding to the new digital file, through the granting server when the client needs to apply the new digital file,
wherein the authorization information is generated by the granting server according to the key corresponding to the new digital file and information of the client where the user logins.

An embodiment of the invention provides a server for digital rights management, which includes:
a combining module configured to combine contents of multiple digital files selected by a user into a new digital file;
a generating module configured to encrypt the new digital file, and to generate authorization information according to a key used in the encryption and information of a client where the user logins; and
a processing module configured to transmit the authorization information to the client to instruct the client to apply the new digital file as per the authorization information.

An embodiment of the invention provides another server for digital rights management, which includes:
a recombining module configured to combine contents of multiple digital files selected by a user into a new digital file;
a transmitting module configured to transmit a key, corresponding to the new digital file, obtained from a granting server to an encrypting server to instruct the encrypting server to encrypt the new digital file by the obtained key; and
an instructing module configured to instruct a client where the user logins to obtain authorization information, corresponding to the new digital file, through the granting server when the client needs to apply the new digital file,
wherein the authorization information is generated by the granting server according to the key corresponding to the new digital file and information of the client where the user logins.

An embodiment of the invention provides a system for digital rights management, which includes:
a server configured to combine contents of multiple digital files selected by a user into a new digital file, to encrypt the new digital file, to generate authorization information according to a key used in the encryption and information of a client where the user logins, and to transmit the authorization information to the client;
the client configured to apply the new digital file as per the authorization information.

In the embodiments of the invention, contents of multiple digital files selected by a user are combined into a new digital file, and authorization information for the new digital file is transmitted to the client, thus achieving authorization for works from multiple sources; and furthermore, no dedicated DRM client is required, thus improving ease of use.

### Brief Description of the Drawings

Fig.1 is a flow chart of a first method for digital rights management according to an embodiment of the invention;
Fig.2 is a schematic flow chart of a first system for digital rights management according to an embodiment of the invention;
Fig.3 is a schematic structural diagram of a first server for digital rights management according to an embodiment of the invention;
Fig.4 is a flow chart of a second method for digital rights management according to an embodiment of the invention;
Fig.5 is a schematic flow chart of a second system for digital rights management according to an embodiment of the invention; and
Fig.6 is a schematic structural diagram of a second server for digital rights management according to an embodiment of the invention.

### Detailed Description of the Embodiments

In view of the problem in the prior art that authorization can not be made for works from multiple sources in digital right management, in embodiments of the invention, contents of multiple digital files selected by a user are combined into a new digital file, and authorization information for the new digital file is transmitted to a client, thus achieving authorization for works from multiple sources.

The embodiments of the invention will be further detailed below with reference to the drawings.

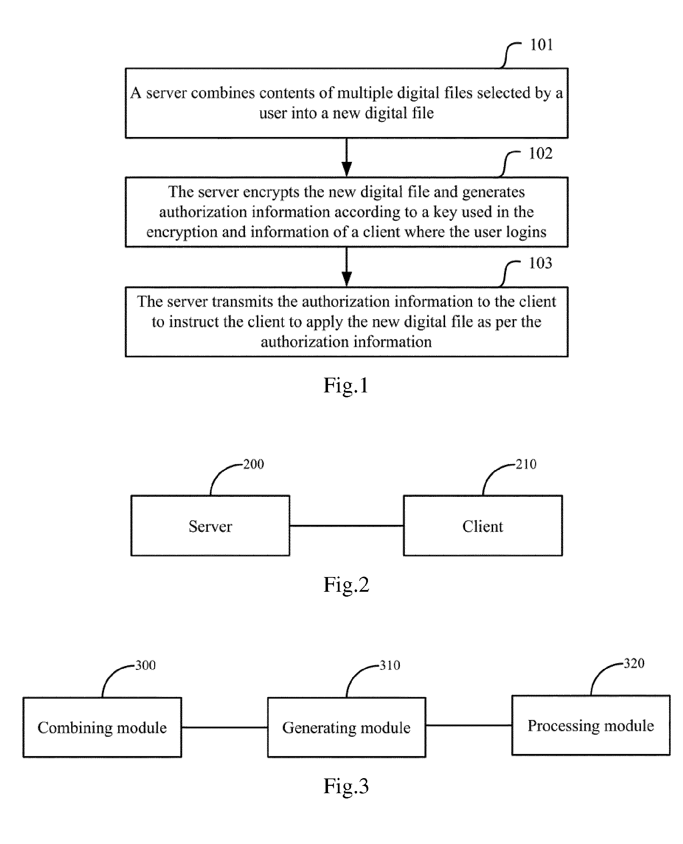

As illustrated in Fig. 1, a first method for digital rights management according to an embodiment of the invention includes the following steps:

Step 101. A server combines contents of multiple digital files selected by a user into a new digital file;

Step 102. The server encrypts the new digital file and generates authorization information according to a key used in the encryption and information of a client where the user logins; and

Step 103. The server transmits the authorization information to the client to instruct the client to apply the new digital file as per the authorization information.

In an implementation, the user can login the server through a webpage, the client, etc. The contents of the digital files selected by the user can be a part of the contents of the digital files or all the contents of the digital files.

Specifically, the server determines the corresponding digital files according to digital file identifiers included in a received recombination message; and

The server determines the contents in the digital files selected by the user according to content information, in the recombination message, bound with the digital file identifiers.

Preferably, the client submits the digital content file identifiers selected by the user and the recombination message (i.e., a selected range of page numbers), and the server locates the files according to the digital content file identifiers (each page in a digital content file is identified by a corresponding page number) and further searches page numbers in the files according to the range of page numbers selected by the user and extracts the corresponding page numbers.

In an implementation, the content information can be a range of page numbers of digital contents that can be recombined.

If the multiple digital files selected by the user are encrypted, then before the step 101, the method can further include:

The server decrypts the contents of each digital file selected by the user respectively by a key corresponding to the each digital file selected by the user.

The decryption process is actually an inverse process of the encryption. To encrypt a file, the file is encrypted by a specific key, and corresponding encryption information is added at a special location of the file; and to decrypt the file, the file is opened by the key, and the corresponding encryption information is deleted from the file, thereby performing the decryption process of the file.

In an implementation, there are two scenarios of the decryption:

In a first scenario, the entire file is decrypted. Particularly:
1. A file key and an encryption scheme of a digital file are retrieved from the server according to the identifier of the file;
2. The encrypted file is opened, and the entire encrypted file is decrypted by the retrieved key and encryption scheme; and
3. Encryption information is replaced with decryption information, and security description information in the original encrypted file is deleted.

In a second scenario, only a part selected by the user is decrypted. Particularly:
1. A file key and an encryption scheme of a digital file are retrieved from the server according to the identifier of the file;
2. The encrypted file is opened, and page numbers are located to find a range of page numbers;
3. An encrypted part in the specified range of page numbers is decrypted by the retrieved key and encryption scheme; and
4. The corresponding part of information among encryption information of the encrypted file is replaced with decryption information, and security description information of the encrypted file is regenerated.

Particularly the page numbers can be located by firstly decrypting the file and then reading index and page number information; and if both the document index and page number information are stored externally, then the file may not be decrypted but the document index and page number information can be read directly to locate the page numbers.

Preferably, the server firstly determines contents selected by the user in each digital file selected by the user and then buffers this part of the contents and decrypts the buffered contents by the key corresponding to the digital file.

For example, the user selects pages 1 to 20 in a digital file A and pages 4 to 28 in a digital file B, and then the server buffers the pages 1 to 20 in the digital file A and the pages 4 to 28 in the digital file B (the buffering here refers to copying and storing, and the pages 1 to 20 in the digital file A and the pages 4 to 28 in the digital file B are still present respectively in the digital files A and B instead of being deleted due to being buffered); and then the server decrypts the buffered pages 1 to 20 in the digital file A by a key corresponding to the digital file A (i.e., a key used to encrypt the digital file A) and decrypts the buffered pages 4 to 28 in the digital file B by a key corresponding to the digital file B (i.e., a key used to encrypt the digital file B).

Preferably, the user can further set a combination order when selecting the contents of the multiple digital files; and correspondingly in the step 101, the server combines the contents of the multiple digital files into a new digital file in the order selected by the user.

In order to improve the security of the new digital file, preferably in the step 102, the server firstly generates a key for the new digital file and then encrypts the new digital file by the generated key.

Specifically, a random number is generated according to a current time of the server and used as an offset to generate randomly a string having a predetermined number of characters as a key.

Preferably, in the step 102, after encrypting the new digital file, the server can instruct the client to obtain authorization information, including a file identifier corresponding to the new digital file, when the client needs to apply the new digital file;

If the user needs to obtain the authorization information, then the user can transmit an authorization request to the server through the client, where the authorization request includes the file identifier and the information of the client (e.g., local hardware information of the client and other information capable of identifying the client);

Correspondingly, the server determines the corresponding new digital file according to the received file identifier and further determines the key corresponding to the new digital file (i.e., the key used to encrypt the new digital file); and then the server generates authorization information according to the determined key and the information of the client and transmits the authorization information to the client; and

The client can apply the new digital file as per the authorization information.

Preferably, the authorization information can further include a usage privilege (e.g., a read privilege, a print privilege, a text copy privilege, etc.), the unique identifier of the file, the encryption key of the file, check information of the authorization file, etc.

Based upon the inventive idea in Fig. 1, a system for digital rights management is further provided in an embodiment of the invention, and since these servers address the problem under a similar principle to that of the digital rights management method in Fig. 1, reference can be made to the implementations of the method for implementations of these servers, and a repeated description thereof will be omitted here.

As illustrated in Fig.2, a first system for digital rights management according to an embodiment of the invention includes a server 200 and a client 210.

The server 200 is configured to combine contents of multiple digital files selected by a user into a new digital file, to encrypt the new digital file, to generate authorization information according to a key used in the encryption and information of a client where the user logins, and to transmit the authorization information to the client; and

The client 210 is configured to apply the new digital file as per the authorization information.

As illustrated in Fig.3, a first server for digital rights management according to an embodiment of the invention includes a combining module 300, a generating module 310 and a processing module 320.

The combining module 300 is configured to combine contents of multiple digital files selected by a user into a new digital file;

The generating module 310 is configured to encrypt the new digital file, and to generate authorization information according to a key used in the encryption and information of a client where the user logins; and

The processing module 320 is configured to transmit the authorization information to the client to instruct the client to apply the new digital file as per the authorization information.

Preferably, the combining module 300 is configured to determine the corresponding digital files according to digital file identifiers included in a received recombination message, and to determine contents in the digital files selected by the user according to content information, in the recombination message, bound with the digital file identifiers.

Preferably, the combining module 300 is configured to decrypt contents of each digital file selected by the user respectively by a key corresponding to the each digital file selected by the user.

Particularly, the combining module 300 is configured to determine the contents selected by the user in the each digital file selected by the user, to buffer the determined contents, and to decrypt the buffered contents by the key corresponding to the each digital file selected by the user.

Preferably, the combining module 300 is configured to combine the contents of the multiple digital files into a new digital file in an order selected by the user.

Preferably, the generating module 310 is configured to transmit an identifier of the new digital file to the client, to determine the corresponding new digital file according to the identifier of the new digital file included in a received authorization request from the client, and to generate the authorization information according to a key corresponding to the determined new digital file and information of the client included in the authorization request.

The server according to the invention in Fig.1 can be a single server, that is, all the functions of the server described above can be performed by a single server.

In an implementation, the server in Fig.1 can alternatively be embodied by multiple servers, the number of which can be determined as needed. An embodiment embodied by three servers will be presented below, that is, the server includes a recombining server, a granting server and an encrypting server.

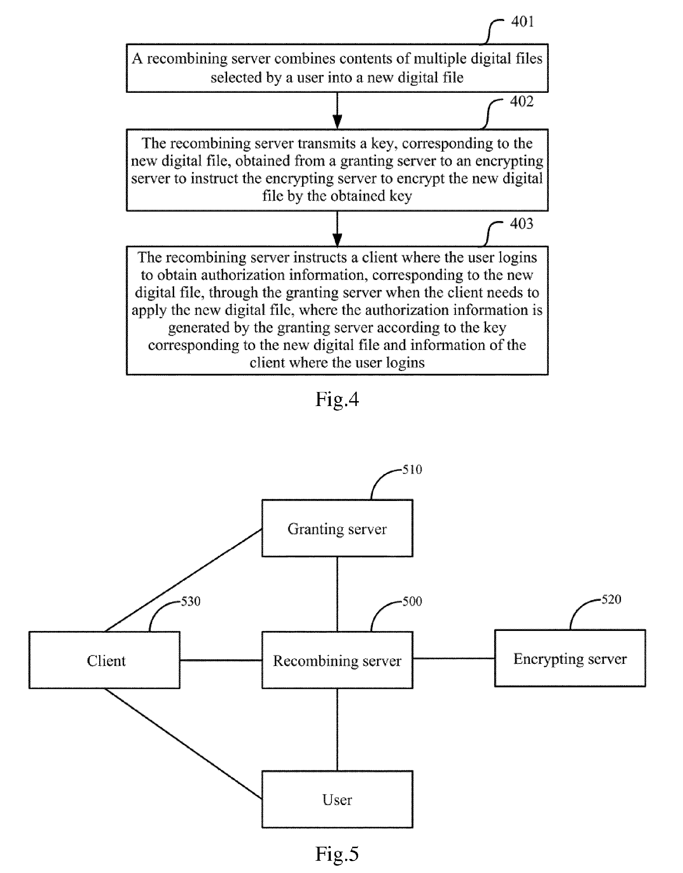

As illustrated in Fig.4, a second method for digital rights management according to an embodiment of the invention includes the following steps:

Step 401. A recombining server combines contents of multiple digital files selected by a user into a new digital file;

Step 402. The recombining server transmits a key, corresponding to the new digital file, obtained from a granting server to an encrypting server to instruct the encrypting server to encrypt the new digital file by the obtained key; and

Step 403. The recombining server instructs a client where the user logins to obtain authorization information, corresponding to the new digital file, through the granting server when the client needs to apply the new digital file.

Particularly the authorization information is generated by the granting server according to the key corresponding to the new digital file and information of the client where the user logins.

In an implementation, the user can login the recombining server over a webpage, through the client, etc. The contents of the digital files selected by the user can be a part of the contents of the digital files or all the contents of the digital files.

Preferably, the recombining server determines the corresponding digital files according to digital file identifiers included in a received recombination message and determines the contents in the digital files selected by the user according to content information, in the recombination message, bound with the digital file identifiers.

In an implementation, the content information can be a range of page numbers of digital contents that can be recombined.

The granting server and the encrypting server can determine an identifier of the new digital file in numerous ways, for example, determine an identifier of the new digital file after the digital file is newly added as in the prior art; or the recombining server can generate an identifier of the new digital file after combining the new digital file and transmit the identifier of the new digital file respectively to the granting server and the encrypting server, and the recombining server can further put the identifier of the new digital file into a list of digital file identifiers so that the granting server and the encrypting server can determine the identifier of the new digital file from the list of digital file identifiers, where the list of digital file identifiers can be stored into any one of the servers.

If the multiple digital files selected by the user are encrypted, then before the step 401, the method can further include:

The recombining server requests the granting server for an authorization for the multiple digital files selected by the user;

The granting server transmits keys corresponding to the multiple digital files to the recombining server; and

The recombining server decrypts the contents of each digital file selected by the user respectively by the received keys corresponding to the multiple digital files.

The decryption process is actually an inverse process of the encryption.

Specifically, the recombining server firstly determines contents selected by the user in each digital file selected by the user and then buffers this part of the contents (in an implementation, the digital files can be stored into a specified server (e.g., a storing server, the granting server, the encrypting server, etc.), and then the recombining server can retrieve the part of the contents from the other server) and decrypts the buffered contents by the key corresponding to the digital files.

For example, the user selects pages 1 to 20 in a digital file A and pages 4 to 28 in a digital file B, and then the recombining server buffers the pages 1 to 20 in the digital file A and the pages 4 to 28 in the digital file B (the buffering here refers to copying and storing, and the pages 1 to 20 in the digital file A and the pages 4 to 28 in the digital file B are still present respectively in the digital files A and B instead of being deleted due to being buffered); and then the recombining server decrypts the buffered pages 1 to 20 in the digital file A by a key corresponding to the digital file A (i.e., a key used to encrypt the digital file A) and decrypts the buffered pages 4 to 28 in the digital file B by a key corresponding to the digital file B (i.e., a key used to encrypt the digital file B).

Preferably, the user can further set a combination order when selecting the contents of the multiple digital files; and correspondingly in the step 401, the recombining server combines the contents of the multiple digital files into a new digital file in the order selected by the user.

In order to improve the security of the new digital file, preferably in the step 402, the granting server firstly generates a key for the new digital file, and then the recombining server transmits the key and the new digital file to the encrypting server, and the encrypting server encrypts the received new digital file by the received key.

Preferably in the step 403, the recombining server instructs the client where the user logins to obtain the authorization information, corresponding to the new digital file, through the granting server when the client needs to apply the new digital file.

If the user needs to obtain the authorization information, then the user can transmit an authorization request to the server through the client, where the authorization request includes the file identifier and the information of the client (e.g., local hardware information of the client and other information capable of identifying the client);

Correspondingly, the granting server determines the corresponding new digital file according to the received file identifier and further determines the key corresponding to the new digital file (i.e., the key used to encrypt the new digital file); and then the server generates authorization information according to the determined key and the information of the client and transmits the authorization information to the client; and

The client can apply the new digital file as per the authorization information.

It shall be noted that Fig.4 is merely for the purpose of illustration and the function of the recombining server can alternatively be performed by the granting server and/or the encrypting server, and thus the server can be embodied by only two servers, and a specific implementation thereof is similar to that in Fig.4, so a repeated description thereof will be omitted here.

Based upon the inventive idea in Fig.4, a system for digital rights management is further provided in an embodiment of the invention, and since these servers address the problem under a similar principle to that of the digital rights management method in Fig.4, reference can be made to the implementations of the method for implementations of these servers, and a repeated description thereof will be omitted here.

As illustrated in Fig. 5, a second system for digital rights management according to an embodiment of the invention includes:

A recombining server 500, a granting server 510 and an encrypting server 520.

Particularly, the second system for digital rights management according to an embodiment of the invention can further include a client 530.

The system in Fig.5 will be detailed below by way of an example.

In the example, multiple documents in CEBX format are recombined and copyright-managed.

There are three files, i.e., Pilgrimage to the West. cebx, The Romance of the Three Kingdoms. cebx, A Dream in Red Mansions. cebx.

A user selects digital content works of interest on the recombining server 500 and determines ranges of page numbers of interest therein, and at the same time combines and sorts these ranges: pages 20 to 30 in Pilgrimage to the West. cebx, denoted by A, pages 60 to 70 in The Romance of the Three Kingdoms. cebx, denoted by B, and pages 90 to 95 in A Dream in Red Mansions. cebx, denoted by C, and the sort order is "ABC".

The recombining server 500 requests the granting server 510 for an authorization of only the selected ranges of page numbers according to the selection by the user;

The granting server 510 generates an authorization to export only the document pages A, B and C in the three documents;

The recombining server 500 decrypts the document pages in the specified ranges of page numbers among these documents as per the authorization; and

The recombining server 500 extracts the decrypted document pages and recombines them in the order of ABC to form a new file "Classic Novel. cebx".

The recombining server 500 requests the granting server 510 for a new key;

The granting server 510 generates a new file key "KRYCY5VRXP1UXZ==" for the recombining server 500;

The recombining server 500 transmits the key and Classic Novel. cebx to the encrypting server 520;

The encrypting server 520 encrypts Classic Novel. cebx by the key;

The encrypting server 520 stores Classic Novel. cebx and the new key in a storing server;

The recombining server 500 notifies the client 530 of an available authorization and transmits identifier information of Classic Novel. cebx to the client 530;

The client 530 transmits a request including information of the client 530 and the identifier of Classic Novel. cebx to the granting server 510;

The granting server 510 generates authorization information according to the information of the client 530 and the key corresponding to Classic Novel. cebx and transmits the authorization information to the client 530;

Particularly, the granting server 510 requests, through the identifier of Classic Novel. cebx, the server where Classic Novel. cebx is stored for the corresponding key.

The client 530 downloads Classic Novel. cebx; and

The client 530 applies the file contents of Classic Novel. cebx as per the authorization information.

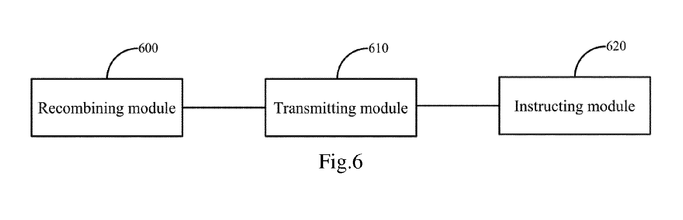

As illustrated in Fig.6, a second server for digital rights management according to an embodiment of the invention includes a recombining module 600, a transmitting module 610 and an instructing module 620.

The recombining module 600 is configured to combine contents of multiple digital files selected by a user into a new digital file;

The transmitting module 610 is configured to transmit a key, corresponding to the new digital file, obtained from a granting server to an encrypting server to instruct the encrypting server to encrypt the new digital file by the obtained key; and

The instructing module 620 is configured to instruct a client where the user logins to obtain authorization information, corresponding to the new digital file, through the granting server when the client needs to apply the new digital file.

Particularly, the authorization information is generated by the granting server according to the key corresponding to the new digital file and information of the client where the user logins.

Preferably, the recombining module 600 determines the corresponding digital files according to digital file identifiers included in a received recombination message and determines contents in the digital files selected by the user according to content information, in the recombination message, bound with the digital file identifiers.

Preferably, the recombining module 600 requests the granting server for an authorization for the multiple digital files selected by the user and decrypts the contents of each digital file selected by the user respectively by received keys corresponding to the multiple digital files.

Particularly, the recombining module 600 determines contents selected by the user in each digital file selected by the user and buffers the determined contents, and requests the granting server for an authorization for the multiple digital files selected by the user and decrypts the buffered contents by received keys corresponding to the multiple digital files.

Preferably, the recombining module 600 combines the contents of the multiple digital files into a new digital file in an order selected by the user.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore, the invention can be embodied in the form of a computer program product embodied in one or more computer useable storage mediums (including but not limited to a disk memory, a CD-ROM, an optical memory, etc.) in which computer useable program codes are contained.

The invention has been described with reference to flow charts and/or block diagrams of the method, the device (system) and the computer program product according to the embodiments of the invention. It shall be appreciated that respective flows and/or blocks in the flow charts and/or the block diagrams and combinations of the flows and/or the blocks in the flow charts and/or the block diagrams can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow charts and/or the block(s) of the block diagrams.

These computer program instructions can also be stored into a computer readable memory capable of directing the computer or the other programmable data processing device server to operate in a specific manner so that the instructions stored in the computer readable memory create manufactures including instruction means which perform the functions specified in the flow(s) of the flow charts and/or the block(s) of the block diagrams.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow charts and/or the block(s) of the block diagrams.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

In the embodiments of the invention, contents of multiple digital files selected by a user are combined into a new digital file, and authorization information for the new digital file is transmitted to a client, thus achieving authorization for works from multiple sources; and furthermore, no dedicated DRM client is required, thus improving ease of use.

Evidently those skilled in the art can make various modifications and variations to the invention without departing from the spirit and scope of the invention. Thus the invention is also intended to encompass these modifications and variations thereto so long as these modifications and variations come into the scope of the claims appended to the invention and their equivalents.

## Claims

1. A method for digital rights management, comprising:
combining, by a server, contents of multiple digital files selected by a user into a new digital file;
encrypting, by the server, the new digital file and generating authorization information according to a key used in the encryption and information of a client where the user logins; and
transmitting, by the server, the authorization information to the client to instruct the client to apply the new digital file as per the authorization information.

2. The method according to claim 1, wherein before combining, by the server, the contents of the multiple digital files selected by the user into the new digital file, the method further comprises:
determining, by the server, the corresponding digital files according to digital file identifiers included in a received recombination message; and
determining, by the server, the contents in the digital files selected by the user according to content information, in the recombination message, bound with the digital file identifiers.

3. The method according to claim 1, wherein before combining, by the server, the contents of the multiple digital files into the new digital file, the method further comprises:
determining, by the server, contents selected by the user in each digital file selected by the user and buffering the determined contents; and
decrypting, by the server, the buffered contents by a key corresponding to the each digital file selected by the user.

4. The method according to claim 1, wherein combining, by the server, the contents of the multiple digital files into the new digital file comprises:
combining, by the server, the contents of the multiple digital files into the new digital file in an order selected by the user.

5. The method according to any one of claims 1 to 4, wherein before generating, by the server, the authorization information, the method further comprises:
transmitting, by the server, an identifier of the new digital file to the client; and
generating, by the server, the authorization information comprises:
determining, by the server, the corresponding new digital file according to the identifier of the new digital file included in a received authorization request from the client; and
generating, by the server, the authorization information according to a key corresponding to the determined new digital file and information of the client included in the authorization request.

6. A method for digital rights management, comprising:
combining, by a recombining server, contents of multiple digital files selected by a user into a new digital file;
transmitting, by the recombining server, a key, corresponding to the new digital file, obtained from a granting server to an encrypting server to instruct the encrypting server to encrypt the new digital file by the obtained key; and
instructing, by the recombining server, a client where the user logins to obtain authorization information, corresponding to the new digital file, through the granting server when the client needs to apply the new digital file,
wherein the authorization information is generated by the granting server according to the key corresponding to the new digital file and information of the client where the user logins.

7. The method according to claim 6, wherein before combining, by the recombining server, the contents of the multiple digital files selected by the user into the new digital file, the method further comprises:
determining, by the recombining server, the corresponding digital files according to digital file identifiers included in a received recombination message; and
determining, by the recombining server, the contents in the digital files selected by the user according to content information, in the recombination message, bound with the digital file identifiers.

8. The method according to claim 6, wherein before combining, by the recombining server, the contents of the multiple digital files into the new digital file, the method further comprises:
determining, by the recombining server, contents selected by the user in each digital file selected by the user and buffering the determined contents;
applying, by the recombining server, to the granting server for authorization for the multiple digital files selected by the user; and
decrypting, by the recombining server, the buffered contents by received keys corresponding to the multiple digital files.

9. The method according to any one of claims 6 to 8, wherein combining, by the recombining server, the contents of the multiple digital files into the new digital file comprises:
combining, by the recombining server, the contents of the multiple digital files into the new digital file in an order selected by the user.

10. A server for digital rights management, comprising:
a combining module configured to combine contents of multiple digital files selected by a user into a new digital file;
a generating module configured to encrypt the new digital file, and to generate authorization information according to a key used in the encryption and information of a client where the user logins; and
a processing module configured to transmit the authorization information to the client to instruct the client to apply the new digital file as per the authorization information.

11. A server for digital rights management, comprising:
a recombining module configured to combine contents of multiple digital files selected by a user into a new digital file;
a transmitting module configured to transmit a key, corresponding to the new digital file, obtained from a granting server to an encrypting server to instruct the encrypting server to encrypt the new digital file by the obtained key; and
an instructing module configured to instruct a client where the user logins to obtain authorization information, corresponding to the new digital file, through the granting server when the client needs to apply the new digital file,
wherein the authorization information is generated by the granting server according to the key corresponding to the new digital file and information of the client where the user logins.

12. A system for digital rights management, comprising:
a server configured to combine contents of multiple digital files selected by a user into a new digital file, to encrypt the new digital file, to generate authorization information according to a key used in the encryption and information of a client where the user logins, and to transmit the authorization information to the client; and
the client configured to apply the new digital file as per the authorization information.
